# EUROPEAN PATENT SPECIFICATION

(11) **EP 3 584 147 B1**
(45) Date of publication and mention of the grant of the patent: **27.10.2021**
(21) Application number: 19180739.5
(22) Date of filing: 18.06.2019
(51) Int. Cl.: B62J 15/02

(54) **ASSEMBLY OF A MUDGUARD, A BAR AND A FASTENING MEMBER**
ANORDNUNG EINES KOTFLÜGELS, EINER STANGE UND EINES BEFESTIGUNGSELEMENTS
ENSEMBLE DE GARDE-BOUE, BARRE ET ÉLÉMENT DE FIXATION

(30) Priority: 19.06.2018 BE 201805417
(43) Date of publication of application: 25.12.2019
(73) Proprietor: Curana Invest bvba, 8850 Ardooie (BE)
(72) Inventor: VENS, Dirk, 8800 ROESELARE (BE)
(74) Representative: Cardoen, Annelies Andréa C.

(56) References cited:
- EP-A1- 2 006 196
- DE-B3-102009 061 085
- IT-A1- PD20 090 248
- IT-A1- PD20 100 069
- JP-A- 2001 018 872

## Description

The present invention relates to an assembly of a mudguard for a bicycle, comprising
- a mudguard that is a single-part mudguard, comprising an inner wall surface which is configured to face a bicycle tyre after installation on a bicycle;
- a bar which is configured to connect the mudguard to a fixed part of the bicycle, and
- a fastening member which is fastenable to the mudguard and by means of which the bar is fastenable to the mudguard at the height of the inner wall surface,
wherein the fastening member comprises a base part with a gutter-shaped recess, and wherein the recess is covered and forms a passage, wherein the bar is configured to extend through this passage and can assume at least two positions in this passage which are rotated with respect to each other and in that the fastening member and/or the mudguard comprises one or several detaining means which limit the possible positions of the bar in the passage, so that the bar is able to assume two rotated end positions in the passage which extend with respect to each other according to a rotation angle.

In order to fasten a mudguard to a part of a bicycle, a bar is often used. The bar is fastened, on one side, to the mudguard and, on the other side, to a fixed part of the bicycle, such as the frame, the carrier, the wheel shaft, etc.

For aesthetic reasons, the bar is sometimes fastened to the mudguard at the height of the inner wall surface of the mudguard, so that the bar is only slightly visible, if at all, at the location of the mudguard. The bar is then fastened by means of only a screw or by means of a fastening member and a screw. If only a screw is used on its own, the bar is, for example, provided with an opening through which the screw may extend. The advantage of using only one screw is that a strong connection is achieved and the position of the mudguard with respect to the wheel changes only slightly during use of the bicycle. However, the drawback is that a modified bar has to be used and that the mudguard is susceptible to breaking at the location of the screw, if forces are applied to the mudguard. If use is made of an additional fastening member, this fastening member is connected to the mudguard and the bar is fastened to the fastening member. A screw is usually used in order to fasten the fastening member to the mudguard. If the mudguard is subjected to a load, the risk of the mudguard breaking is reduced, but the risk of undesirable detachment of the bar is significant. Fastening the bar to the mudguard is also more complicated in this case.

IT PD20 100 069 illustrates a two-part fastening member by means of which a bar is fastenable to a mudguard at the height of the inner wall surface of the mudguard. This fastening member comprises a first part with a groove in which a part of the bar is configured to extend and a second part which can be click-fitted to this first part. An opening is provided on this mudguard so as to be able to fasten the bar to the mudguard. The first part, with the bar which extends into the groove, is then partially arranged through this opening from the inner wall surface, so that a part of this first part extends above the outer wall surface of the mudguard and the second part is then click-fitted onto this latter part of the first part in order thus to fasten the bar to the mudguard. Here, the second part covers the groove of the first part. This is a complicated way of fastening the bar to the mudguard. The document IT PD20 100 069 discloses an assembly of a mudguard for a bicycle in accordance with the preamble of claim 1.

It is therefore an object of the invention to produce an assembly of a mudguard, a bar and a fastening member, wherein the fastening member allows the bar to be fastened to the mudguard in a simple and a sufficiently strong way and wherein the risk of undesirable detachment of the bar or breaking of the mudguard when the mudguard is subjected to a load is low.

This object is achieved by providing an assembly of
- a mudguard for a bicycle, comprising an inner wall surface which is configured to face a bicycle tyre after installation on a bicycle, wherein the mudguard is a single-part mudguard;
- a bar which is configured to connect the mudguard to a fixed part of the bicycle, and
- a fastening member which is fastenable to the mudguard and by means of which the bar is fastenable to the mudguard at the location of the inner wall surface,
wherein the fastening member comprises a base part which is configured to extend with one side essentially against the inner wall surface, wherein this side comprises a gutter-shaped recess, so that this gutter-shaped recess is covered by the inner wall surface and the recess forms a passage, wherein the bar is configured to extend into this passage and can assume at least two positions in this passage which are rotated with respect to each other and that the fastening member and/or the mudguard comprises one or several detaining means which limit the possible positions of the bar in the passage, so that the bar is able to assume two rotated end positions in the passage which extend with respect to each other according to a rotation angle, wherein the base part is configured to extend with one side essentially against the inner wall surface, wherein this side comprises the gutter-shaped recess, so that this gutter-shaped recess is covered by the inner wall surface and the recess forms the said passage, and in that the inner wall surface, at least at the location of the recess, forms an uninterrupted continuous unit, so that the recess is completely covered by the inner wall surface.

Here, the bar extends through the said passage. Here, the recess is covered by the inner wall surface of the mudguard. The bar is therefore clamped between the fastening member and the mudguard. As a result thereof, the risk of the bar detaching in an undesirable manner when the mudguard is subjected to a load is low. The risk of the mudguard becoming damaged at the location of the bar while the mudguard is being subjected to a load is also low. This is also a connection which is easy to bring about. In this case, only the base part has to be fitted against the inner wall surface of the mudguard and this preferably while the bar is already in the gutter-shaped recess. The fastening member itself may be fastened to the mudguard by means of a click-fit connection, a magnetic connection, a screw connection, adhesive bonding, etc.

Preferably, the bar is provided to extend rotatably and this bar can only perform a limited rotation due to the presence of the detaining means. Here, the bar then has two end positions and an infinite number of positions between these end positions. However, the bar may also assume a limited number of fixed positions which have been rotated with respect to each other, wherein there are then two end positions and no or only a limited number of positions between these end positions. With this last option, the bar may optionally still move from one position to another position after the bar has been fastened to the mudguard. Thus, it is possible that the bar already has to be fitted in the desired position in the recess before connecting the bar to the mudguard.

The said rotation angle may be relatively small, for example 10°, 5° or 1°. However, this rotation angle may also be 80°, 60°, 50°, 40°, 30°, 20° or 15°. The smaller the rotation angle, the stronger the connection between the mudguard and the bicycle and the smaller the options of the mudguard for moving with respect to the wheel while the bicycle is in use. Here, the bar has a certain, but limited, freedom of movement. As a result thereof, the bar may be fastened to a fixed part of the bicycle in a simpler manner. This is because the bar can be rotated in the passage when the bar has already been fastened to the mudguard and/or the bar can be fitted in the desired position in the recess beforehand, so that it is easy to position the bar in such a way that it is readily fastenable to the desired part of the bicycle. If the bar extends rotatably through the passage, this ensures that the mudguard is better able to absorb loads applied to the mudguard, as a limited movement of the mudguard with respect to the bicycle wheel is possible.

According to the invention, the mudguard is a single-part mudguard which has been produced, for example by means of extrusion. Additional objects, such as mudguard flaps and/or lighting elements, may be fastened to this mudguard. Here, the said fastening member is therefore fastened to the mudguard.

According to the invention, at least at the location of the recess, the inner wall surface forms an uninterrupted continuous unit, so that the recess is completely covered by the inner wall surface. Here, the outer wall surface of the mudguard, which extends opposite the inner wall surface, therefore preferably forms an uninterrupted and smooth continuous unit, at least at the location of the recess, so that the mudguard is seen as being aesthetic.

Also, the base part is preferably configured to extend substantially against the inner wall surface of the mudguard. The inner wall surface then preferably forms an essentially uninterrupted continuous unit at the location of the base part, so that the base part is essentially completely covered by the inner wall surface. Still more preferably, the fastening member is configured to be fitted against the inner wall surface in such a way that the entire fastening member is substantially, and in one specific embodiment completely, covered by the inner wall surface, i.e. by the mudguard.

Preferably, the bar is configured to extend rotatably and the one or several detaining means are configured to limit the rotation of the bar in the passage. Here, the detaining means will allow a rotation of the bar, if the bar is fastened to the mudguard by means of the fastening member, in which case this rotation is limited. Here, the passage will preferably extend substantially along a specific length direction. Here, the bar is rotatable about an axis which extends along the passage. The bar is then rotatable about an axis which extends through the passage and/or which extends essentially parallel to the length direction of the passage. Furthermore preferably, the mudguard extends along a length direction and the mudguard has a plane of symmetry, viewed along the length direction, wherein the passage then preferably extends essentially perpendicular to this plane of symmetry.

The gutter-shaped recess terminates on both sides, so that the bar is able to extend therein and has an opening which is configured to be covered by the inner wall surface.

The said detaining means may extend at the location of the passage, but may also extend at a distance from the passage. The bar preferably successively comprises a first leg, an intermediate piece and a second leg, wherein the said legs are configured to extend substantially on either side of a bicycle tyre and the intermediate piece is configured to extend through the passage.

In a preferred embodiment, the fastening member, in particular the base part, comprises the one or several detaining means. Here, it is then possible to provide standard mudguards, such as for example mudguards which are produced by means of extrusion, as in this case no said detaining means have to be provided on the mudguard. Here, the fastening member itself ensures the limitation of the rotation, as a result of which it is readily possible to provide the desired fastening member for each type of bar and as a result of which it is also readily possible to provide the desired limitation of the said rotation angle. Thus, it is then for example possible to provide fastening members which allow a maximum rotation of the bar of 5°, 10°, 20°, 50°, etc.

Furthermore preferably, the one or several detaining means form a boundary of the gutter-shaped recess. Here, these one or several detaining means then assist in forming the gutter-shaped recess. Thus, they form part of the border of the gutter-shaped recess, as a result of which they are very well able to limit the positions of the bar. Here, it is not necessary to provide a fastening member with separate detaining means, but only a gutter-shaped recess has to be provided.

Also furthermore preferably, the one or several detaining means extend at the location of an end portion of the gutter-shaped recess. As indicated above, a gutter-shaped recess terminates on both sides, so that the gutter-shaped recess also always comprises an end portion on both sides. Here, the detaining means may be separate parts or may also assist in forming a said end portion of the recess. Still more preferably, one or several detaining means extend at the location of both said end portions. In this way, it is possible to limit the positions more efficiently, since they are limited at two locations which are situated at a distance apart. As a result thereof, the connection between the bar and the mudguard is even stronger.

In an alternative embodiment, the one or several detaining means extend at the location of a central part of the gutter-shaped recess.

In a highly preferred embodiment, the bar extends along a plane and the bar has a neutral position in the gutter-shaped recess, wherein the plane in which the bar extends makes an angle of essentially 90° with respect to the contact surface on the mudguard, at the location of the gutter-shaped recess, wherein the maximum rotation of the bar from the neutral position in the one direction is greater than in the other direction. The maximum rotation in the said other direction may, for example, be smaller than 5°. The ideal position for connecting the bar with the bicycle is when the bar is in its neutral position in the gutter-shaped recess. However, due to the construction of the bicycle and/or the desired part of the bicycle to which the bar is to be fastened, it is possible that it may not be possible, or only with difficulty, to connect the bar with a fixed part of the bicycle when the bar is in this neutral position. Preferably, the bar is then rotated upwards. This is because there are more fastening points in the upward direction and also because this will result in a stronger connection which is still better able to absorb forces acting on the mudguard, than when the bar is connected at a lower position. In other words, a rotation in one direction is often sufficient. If forces are exerted on the mudguard, the bar may rotate in the recess, if the bar is configured to extend rotatably in the passage. The greater the possible rotation, the greater the freedom of movement. However, an excessive freedom of movement of the mudguard is undesirable, as this leads to excessive movement of the mudguard with respect to the parts of the bicycle. By ensuring that possible rotation of the bar from the neutral position in the one direction is greater than in the other direction, it is possible to ensure here that rotation is only possible from the neutral direction in the desired direction or in all respects greatly limit the possible rotation in the other direction, as a result of which the total possible rotation is small, but still sufficient to make simple fastening to a fixed part of the bicycle possible.

In a preferred embodiment, the gutter-shaped recess, viewed along a direction through the passage, successively comprises a first end portion, a middle part and a second end portion, and the bar successively comprises a first leg, an intermediate piece and a second leg, wherein the said legs are configured to extend substantially on both sides of a bicycle tyre and the intermediate piece is configured to extend through the passage, wherein the intermediate piece successively comprises a first arm, a central part and a second arm, so that the arms form the connection between the respective legs and the central part, wherein the length of the central part essentially corresponds to the length of the middle part and the central part is configured to extend essentially completely in the middle part and each arm is configured to, at least partly, extend in a respective end portion. Here, the design of the gutter-shaped recess is adapted to the design of the bar, as a result of which a satisfactory and strong connection is brought about.

Furthermore preferably, the middle part is elongate and the central part is rod-shaped and rotatably arranged in the middle part about an axis which essentially extends along the length direction of the middle part. Here, the rotation of the central part per se is then preferably not limited or only to a small extent. In other words, the detaining means preferably do not extend at the location of the middle part. During the rotation of the central part, the arms will start to move. The detaining means can then be arranged in such a manner that they limit possible movement of the arms. Preferably, here, a said detaining means extends at the location of a said end portion. The said detaining means will here then limit the movement of the arm in the end portion and thus limit the rotation of the bar.

Still more preferably, the gutter-shaped recess comprises a bottom which extends opposite the side of the gutter-shaped recess which is configured to be covered by the inner wall surface, wherein the distance of the bottom of a said end portion to the inner wall surface decreases in the direction of the middle part. Here, the design of the end portions is then adapted to that of the arms. The edges of the end portions may here simply be designed in such a way that, during the rotation of the bar and thus during the movement of the arm in its respective end portion, the bar can come into contact with these edges, as a result of which the movement of the arm is limited and thus the rotation of the bar is limited. Here, these edges can then simply be designed in such a way that they form the said detaining means.

Furthermore preferably, at the location of the end portion, this bottom forms an obtuse angle with or this bottom, at the location of the end portion, makes a bend of less than 90° with respect to the middle part.

Furthermore, in a preferred embodiment, each arm forms an obtuse angle with or each arm makes a bend of less than 90° with respect to the central part.

Furthermore, in a highly preferred embodiment, the said obtuse angle or bend of less than 90° of a said arm essentially corresponds to the obtuse angle or bend of less than 90° of the bottom of the respective end portion. Thus, the shape of the gutter-shaped recess is completely adapted to the shape of the intermediate piece.

In a preferred embodiment, the mudguard essentially comprises a plane of symmetry viewed along its length direction and the passage is configured to extend substantially perpendicularly to this plane of symmetry. When the recess comprises a said middle part, the middle part extends substantially perpendicularly to the plane of symmetry. The bar is preferably provided to extend rotatably through this passage and is here then furthermore preferably rotatable about an axis which extends substantially perpendicularly to the plane of symmetry. If the bar successively comprises a first leg, an intermediate piece and a second leg, wherein the said legs are configured to extend substantially on both sides of a bicycle tyre and the intermediate piece is configured to extend through the passage, the ends of the legs which are configured to be fastened on a fixed bicycle part move upwards or downwards during rotation of the bar. As a result thereof, fastening the bar to a fixed bicycle part is simple.

Preferably, the inner wall surface of the mudguard comprises a protrusion which limits a movement of the bar through the passage when the bar is in a fastened position on the mudguard. This protrusion ensures that the bar cannot move, or only to a limited extent, along the direction of the passage, as a result of which the bar cannot move out of the passage when it is in a fastened position. This ensures a sufficiently strong connection between the mudguard and the bar. It is simple to provide the inner wall surface with a protrusion. Thus, it is, for example, possible to extrude a mudguard which comprises an upright element over the full length of the mudguard.

Furthermore, in a specific embodiment, the inner wall surface comprises two said protrusions, wherein these protrusions extend along the length direction of the mudguard and are configured to extend on both sides of the passage. Thus, the movement of the bar through the passage is limited on both sides. Such a mudguard can easily be produced by means of extrusion.

In a specific embodiment, the fastening member comprises a protruding element and the mudguard comprises a corresponding opening in which the protruding element is accommodable in a click-fitted manner or, conversely, for fastening the fastening member to the mudguard. Here, this opening forms an interruption of the mudguard and thus also an interruption of the inner wall surface of the mudguard. Here, parts of the fastening member are therefore visible from the outside of the mudguard. In this way, there is no need to provide separate fastening means, as a result of which fastening can be effected very smoothly. Obviously, it is possible to opt for fastening the fastening member to the mudguard as well, using for example a screw. It is possible, for example, to produce a fastening member for this purpose which is already provided with a passage for a screw. This protruding element may, for example, form part of a part of the fastening member which is flexibly connected to another part of the fastening member, so that this protruding element can easily be click-fitted in the opening.

In another specific embodiment, the outer wall surface of the mudguard which is situated opposite the inner wall surface is completely uninterrupted at the location of the fastening member and the fastening member comprises one or several elements in order to fasten the fastening member to the inner wall surface. Here, the inner wall surface then forms an uninterrupted continuous unit, at least at the location of the fastening member, so that the fastening member is completely covered by the inner wall surface. Here, the fastening member and thus also the connection between the fastening member and the mudguard is therefore not visible from the outside of the mudguard. This therefore consists of an essentially invisible connection which is deemed to be aesthetic. The one or several elements may be elements which are accommodable in a clampable or click-fitted manner between elements of the inner wall surface, such as protrusions of the inner wall surface (see below) and/or edges of the mudguard. It is possible to use, optionally additionally, screws which do not extend beyond the outer wall surface in order to fasten the fastening member to the mudguard.

In a highly preferred embodiment, the fastening member is configured to delimit an end edge of the mudguard, viewed along the length direction of the mudguard. The fastening member then forms an end edge or, for example, a mudflap. If the mudguard is a metal mudguard, made by means of extrusion, the mudguard will have sharp end edges. The fastening member then protects one of these end edges.

In a specific embodiment, the mudguard essentially comprises a plane of symmetry viewed along its length direction, two said protrusions at the location of its inner wall surface which extend along the length direction of the mudguard at a distance apart and along both sides of the plane of symmetry, wherein the base part is configured to extend essentially against the inner wall surface and between both protrusions. Furthermore preferably, the base part is then clamped and/or pushed between both protrusions, as a result of which the connection between the fastening member and the mudguard is sufficiently strong.

Furthermore preferably, the fastening member comprises an edge part which is configured to delimit an end edge of the mudguard, viewed along the length direction of the mudguard, a first fastening part and a second fastening part, wherein the said fastening parts and the base part are connected to the edge part and extend next to each other and at a distance apart, and wherein the mudguard comprises two side edges which extend along the length direction on both sides of the plane of symmetry, wherein the first and the second fastening part are configured to extend essentially against the inner wall surface and between a respective protrusion and a lateral edge of the mudguard.

The object of the invention is also achieved by providing a bicycle comprising an assembly as described above.

Preferably, the bar of this bicycle extends along a plane and this bar has a neutral position in the gutter-shaped recess, wherein the plane in which the bar extends makes an angle of essentially 90° with respect to the contact surface on the mudguard, at the location of the gutter-shaped recess, wherein the maximum rotation of the bar from the neutral position in the upward direction is greater than in the downward direction.

In the following description, an assembly according to the present invention is described in more detail. This description only serves to further explain the characteristics of the invention and may therefore not be seen as a limitation of the scope of protection defined in the claims of this patent application for the present invention, nor as a limitation of the area of application thereof.

Reference numerals are used in this description to refer to the attached figures, in which:
- ***Fig. 1*** shows a side view of a bicycle, wherein this bicycle comprises two assemblies according to the invention;
- ***Fig. 2*** shows a side view of a bicycle, wherein this bicycle comprises two assemblies according to the invention;
- ***Fig. 3*** shows a detail view of a perspective view of a first embodiment of an assembly according to the invention, wherein the bar is fastened to the mudguard;
- ***Fig. 4*** shows a detail view of a perspective view of the first embodiment of the assembly, during fastening of the bar to the mudguard;
- ***Fig. 5*** shows a section through the first embodiment of the assembly at the location of the bar, wherein the bar is fastened to the mudguard;
- ***Fig. 6*** shows a perspective view of the fastening member of the first embodiment of the assembly;
- ***Fig. 7*** shows a side view of the fastening member of the first embodiment of the assembly;
- ***Fig. 8*** shows a detail view of a top view of the bar;
- ***Fig. 9*** shows a detail view of a perspective view of the mudguard;
- ***Fig. 10*** is a diagrammatical illustration of Fig. 5, wherein only the bar and the base part are illustrated and in which the rotation axis is illustrated;
- ***Fig. 11*** shows a diagrammatical section of the first embodiment of the assembly, perpendicular to the rotation axis at the location of an end portion, wherein only the bar and the base part are illustrated and wherein the neutral position of the bar in the recess is illustrated as a solid line and the end positions are illustrated as dashed lines;
- ***Fig. 12*** shows a diagrammatical illustration of a section of a second embodiment of the assembly at the location of the bar, wherein only the bar and the base part are illustrated and wherein the rotation axis is illustrated;
- ***Fig. 13*** shows a diagrammatical section of the second embodiment of the assembly, perpendicular to the rotation axis at the location of the middle part, wherein only the bar and the base part are illustrated and wherein the neutral position of the bar in the recess is illustrated as a solid line and the end positions are illustrated as dashed lines;
- ***Fig. 14*** shows a diagrammatical illustration of a section of a third and fourth embodiment of the assembly at the location of the bar, wherein only the bar and the base part are illustrated and wherein the rotation axis is illustrated;
- ***Fig. 15*** shows a diagrammatical section of the third embodiment of the assembly, perpendicular to the rotation axis at the location of the middle part, wherein only the bar and the base part are illustrated;
- ***Fig. 16*** shows a diagrammatical section of the fourth embodiment of the assembly, perpendicular to the rotation axis at the location of the middle part, wherein only the bar and the base part are illustrated.

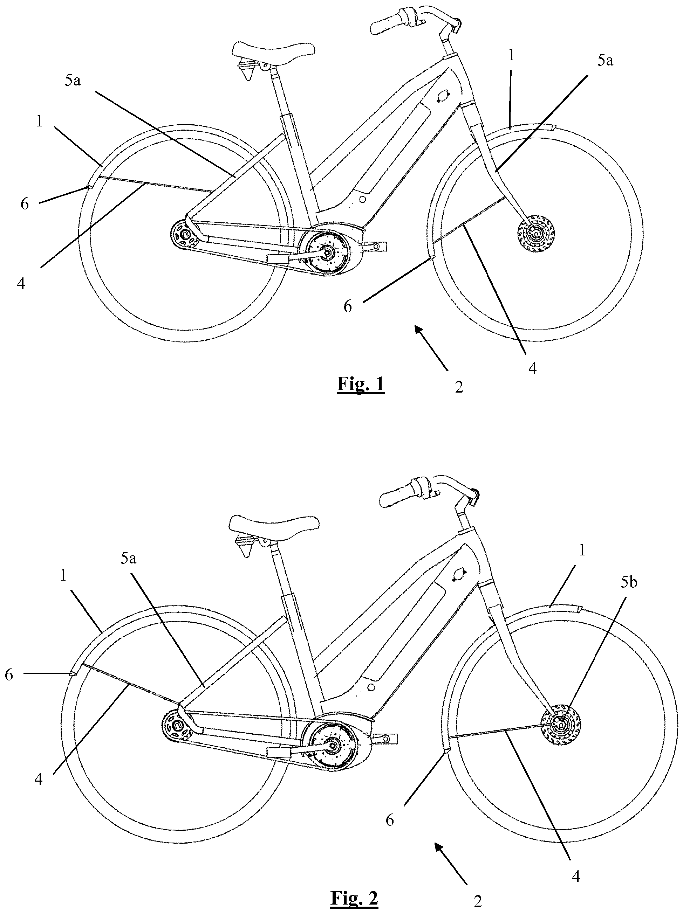

The assembly as illustrated in the figures comprises a mudguard (1), a fastening member (6) and a bar (4). The mudguard (1) is a mudguard (1) for a bicycle (2). By means of the fastening member (6) and the bar (4), the mudguard (1) is fastenable to a bicycle (2). Figs. 1 and 2 illustrate two embodiments of bicycles (2) comprising two assemblies according to a first embodiment of the invention. Each bicycle (2) comprises a first assembly wherein the mudguard (1) is a rear mudguard (1) which, after it has been installed on a bicycle (2), is configured to extend at the location of a rear tyre. Each bicycle (2) also comprises a second assembly wherein the mudguard (1) is a front mudguard (1) which, after it has been installed on a bicycle (2), is configured to extend at the location of a front tyre.

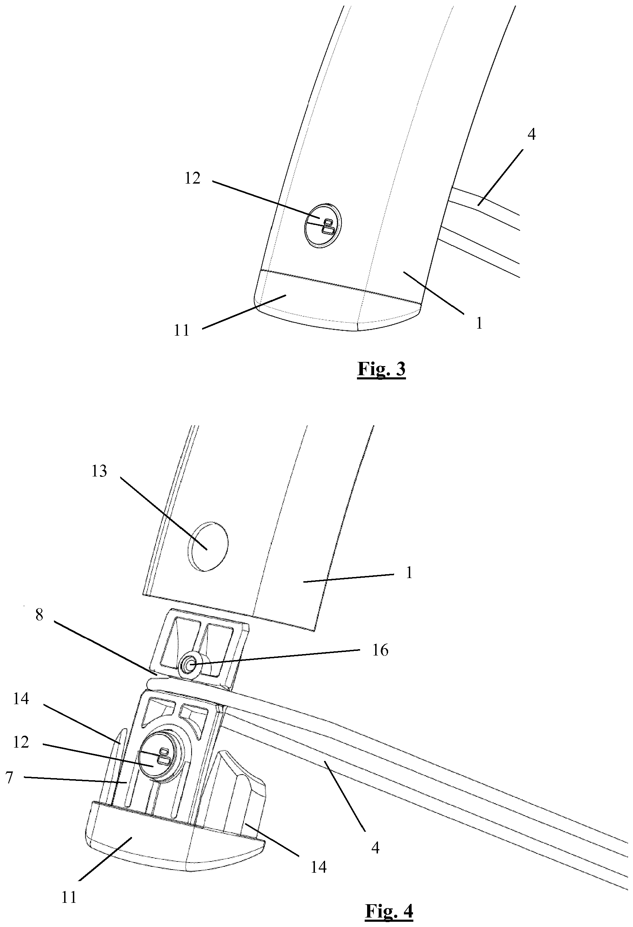

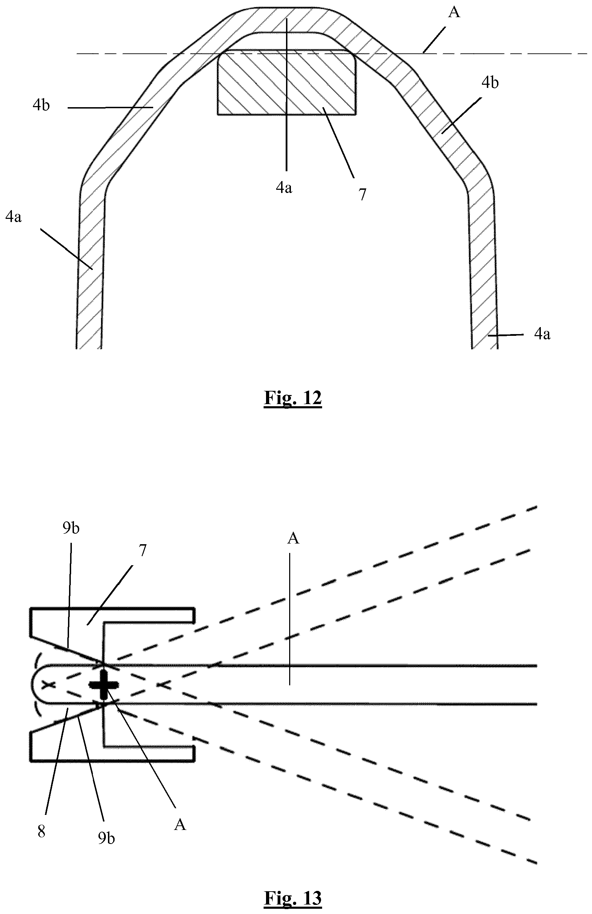

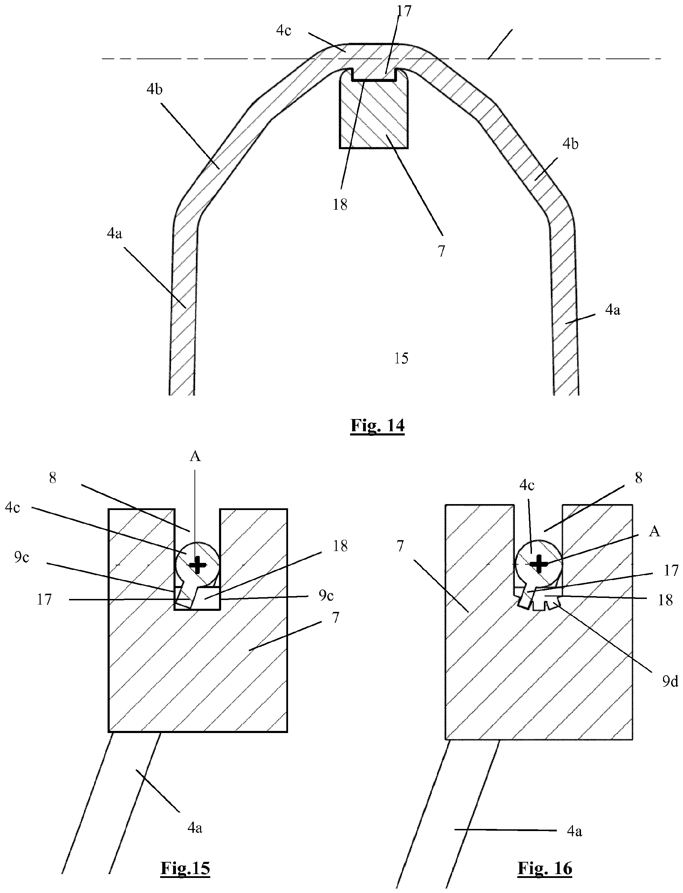

Figs. 3 to 11 show a first embodiment of an assembly according to the invention in more detail. Figs. 12 and 13 show a second embodiment of an assembly according to the invention and Figs. 14, 15 and 16 show a third and a fourth embodiment of an assembly according to the invention.

In the first and the second embodiment, the bar (4) and the mudguard (1) are designed in a similar way, only the fastening member (6) differs. In the third and the fourth embodiment, a different type of bar (4) and a different type of fastening member (6) are used, but the type of mudguard (1) corresponds to the type of mudguard (1) of the first and the second embodiment.

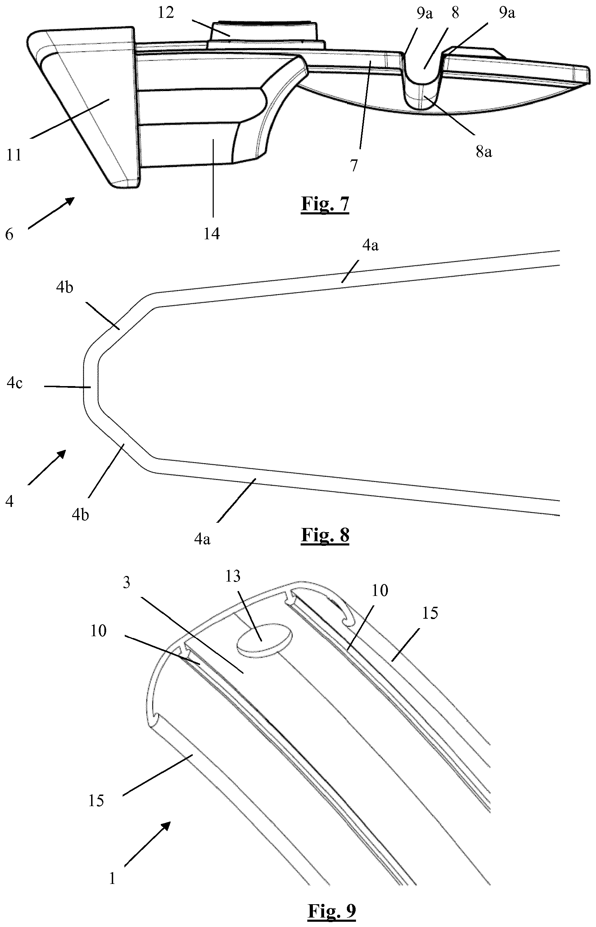

The first embodiment of the assembly according to the invention is composed as follows:
The mudguard (1), as is illustrated in detail in Fig. 9, is made by means of extrusion and comprises an inner wall surface (3) which is configured to face a bicycle tyre after installation on a bicycle (2). The mudguard (1) extends along a length direction and essentially has a plane of symmetry which extends along the length direction. The mudguard (1) comprises two side edges (15) which extend on both sides of the plane of symmetry and along the length direction. The mudguard (1) also comprises two end edges, viewed along the length direction. The inner wall surface (3) furthermore comprises two elongate protrusions (10) which extend along the complete length direction and extend at a distance apart and symmetrical with respect to the plane of symmetry. At the location of one said end edge which is configured to extend at the rear of a wheel, the mudguard (1) comprises a transverse opening (13).

The bar (4) as illustrated in detail in Fig. 8 successively comprises a first leg (4a), an intermediate piece and a second leg (4a), wherein the legs (4a) are configured to extend along both sides of the bicycle tyre and thus on both sides of the plane of symmetry of the mudguard (1). The intermediate piece successively comprises a first arm (4b), a central part (4c) and a second arm (4b), so that the arms (4b) form the connection between the respective legs (4a) and the central part (4c). All parts of the bar (4) are rod-shaped and have a circular section. Each of the arms (4b) makes an obtuse angle with the central part (4c).

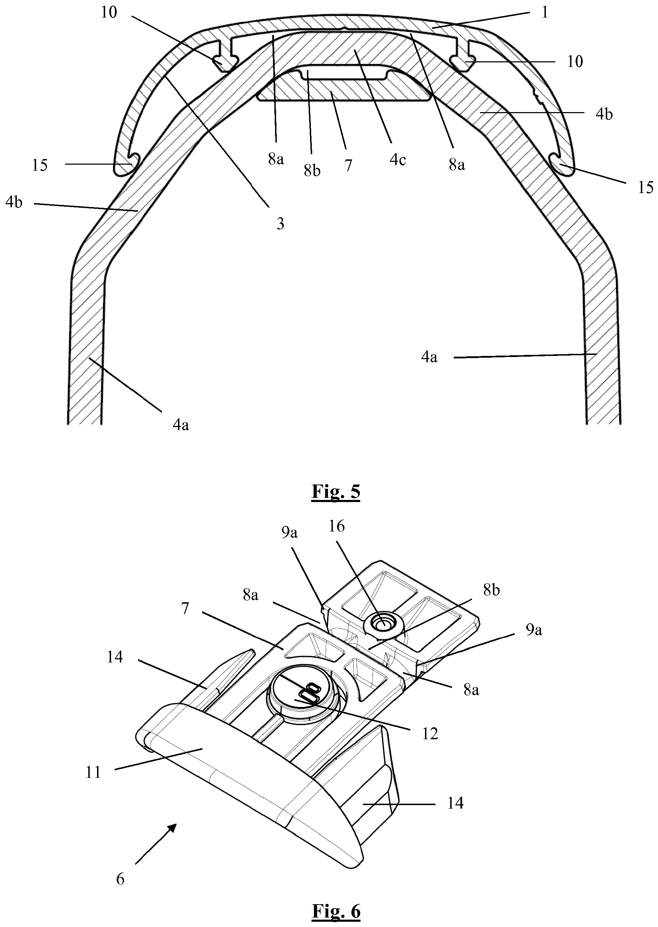

As is clearly visible in Figs. 6 and 7, the fastening member (6) comprises an edge part (11) which is configured to delimit the end edge of the mudguard (1) which is closest to the said opening (13), a first fastening part (14), a base part (7) and a second fastening part (14), wherein the said fastening parts (14) and the base part (7) are connected to the edge part (11) and extend next to each other and a distance apart. The base part (7) is flexibly connected to the edge part (11) and comprises a protruding element (12) which is accommodable in the opening (13) in a click-fitted manner in order to fasten the fastening member (6) to the mudguard (1). The base part (7) is configured to extend with one side against the inner wall surface (3) of the mudguard (1), wherein this side comprises a gutter-shaped recess (8), so that this gutter-shaped recess (8) is covered by the inner wall surface (3) and the recess (8) forms a passage.

The gutter-shaped recess (8) successively comprises a first end portion (8a), a middle part (8b) and a second end portion (8a). The middle part (8b) is elongate and has a length which essentially corresponds to the length of the central part (4c). The gutter-shaped recess (8) comprises a bottom which extends opposite the side of the gutter-shaped recess (8) which is configured to be covered by the inner wall surface (3), wherein the distance of the bottom of both end portions (8a) to the inner wall surface (3) decreases in the direction of the middle part (8b). At the location of each end portion (8a), the bottom also makes a bend of less than 90° with respect to the middle part (8b). The middle part (8b) is configured to extend essentially perpendicular to the plane of symmetry of the mudguard (1).

In order to fasten the bar (4) to the mudguard (1), one proceeds as follows: first, the bar (4) is arranged in the gutter-shaped recess (8). This is clearly visible in Fig. 4. The bar (4) is arranged in such a manner that the central part (4c) extends in the middle part (8b) and each of the arms (4b) partly extends in a respective end portion (8a). The design of the end portions (8a) is thus that the arms (4b) essentially completely bear against the said bottom of the respective end portion (8a). Then, the fastening member (6) is fastened to the mudguard (1) by pushing the fastening parts (14) and the base part (7) against the inner wall surface (3) in such a manner that the base part (7) comes to lie between the protrusions (10) and the fastening parts (14) between a respective protrusion (10) and said side edge (15) and this until the protruding element (12) clicks into the opening (13) of the mudguard (1). Here, this protruding element (12) is then actually visible from the outside of the mudguard (1), but the protruding element (12) may be finished in an aesthetic way, for example with a logo, so that this is not unattractive. Here, the protrusions (10) extend on both sides of the recess (8), and thus of the passage. The base part (7) is pushed between these protrusions (10) and is clamped in between. This can clearly be seen in Fig. 5. If desired, it is possible, in addition, to fit a screw through a screw opening (16) of the base part (7) in order to strengthen the connection between the fastening member (6) and the mudguard (1). However, the latter is not obligatory.

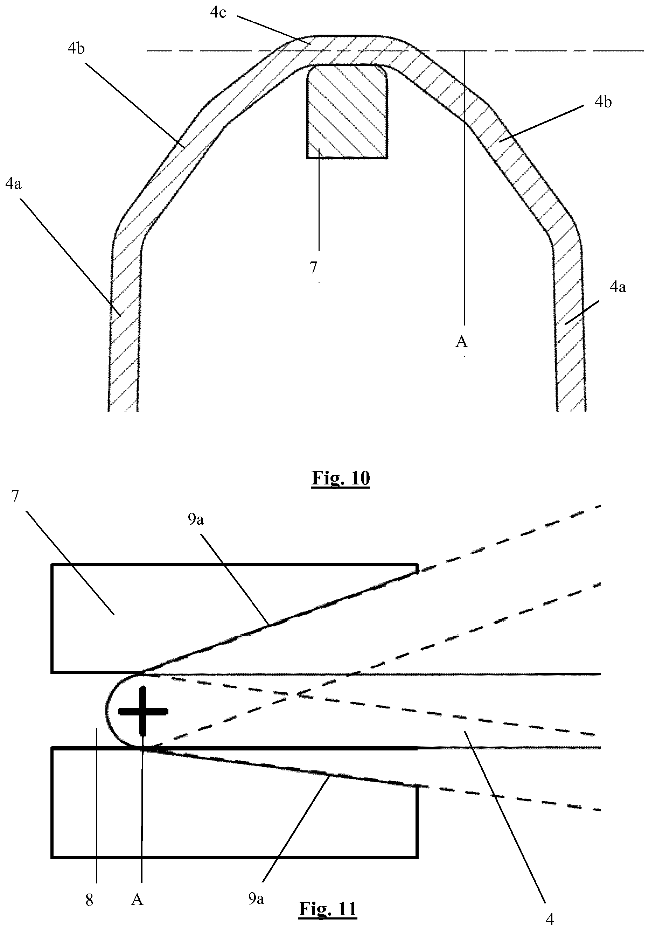

The side edges (15), together with the protrusions (10), ensure that it is essentially impossible for the bar (4) to move along the direction of the passage, once the bar (4) has been fastened to the mudguard (1). The side edges (15) and the protrusions (10) form a lateral boundary of the bar (4). The bar (4) extends rotatably through the passage. Here, the central part (4c) can rotate freely in the middle part (8b) about an axis (A) which extends along the length direction of the middle part (8b) and extends centrally through the middle part (8b). This is clearly visible in Fig. 10. Here, this axis (A) thus extends essentially perpendicularly to the plane of symmetry of the mudguard (1). The plane of symmetry of the mudguard (1) is configured to extend upright when the bicycle (2) is in use. During rotation of the bar (4), the arms (4b) and legs (4a) will thus either rotate in an upward direction or rotate in a downward direction. As a result of the design of the end portions (8a), the arms (4b) can, during rotation, come into contact with the edges (9a) of their respective end portion (8a). This is clearly visible in Fig. 11. Fig. 11 shows the neutral position of the bar (4) in the recess (8) represented as a solid line. In this neutral position, the bar (4) makes an angle of essentially 90° with the contact surface of the mudguard (1), at the location of the recess (8). Here, the bar (4) may rotate in an upward direction from the neutral position and may also rotate in a downward direction from the neutral position. Due to the design of the edges (9a), the bar (4) may rotate in an upward direction over a relatively large angle. This means that, when the bar (4) has been fastened to the mudguard (1), but not yet to a fixed part of the bicycle (5a, 5b), that it is possible to rotate more in an upward direction than in a downward direction, from the neutral position. Here, the possible rotation of the bar (4) is limited and the possible rotation in an upward direction is larger than the possible rotation in a downward direction. Here, these edges (9a) of the end portions (8a) then form detaining means (9a) which limit the rotation of the bar (4) through the passage and ensure that two end positions of the bar (4) are possible which form a rotation angle with respect to each other.

Figs. 12 and 13 illustrate a second embodiment of the assembly according to the invention. Here, only a different type of fastening member (6) is used compared to the first embodiment. The design of the gutter-shaped recess (8) is different here, as a result of which the rotation axis (A) of the bar (4) extends at a distance from the middle part (8b) instead of centrally through the middle part (8b). The plane of symmetry of the mudguard (1) is configured to extend upright when the bicycle (2) is in use. During the rotation of the bar (4), the arms (4b) and legs (4a) will thus either rotate in an upward direction or rotate in a downward direction. Due to the design of the middle part (8b), the central part (4c) can come into contact with the edges (9b) of the middle part (8b) during the rotation. This is clearly visible in Fig. 13. In Fig. 13, the neutral position of the bar (4) in the recess (8) is illustrated as a solid line. In this neutral position, the bar (4) makes an angle of essentially 90° with the contact surface of the mudguard (1), at the location of the recess (8). Here, the bar (4) may rotate in an upward direction from the neutral position and may also rotate in a downward direction from the neutral position. Due to the design of the edges (9b), the bar (4) can rotate over the same angle, both in an upward and in a downward direction. Here, these edges (9b) of the central part (4c) then form detaining means (9b) which limit the rotation of the bar (4) through the passage and ensure that two end positions of the bar (4) are possible which form a rotation angle with respect to each other.

In Figs. 14, 15 and 16, a third and a fourth embodiment of the assembly according to the invention are illustrated. Here, use is made of a different type of fastening member (6) and a different type of bar (4) compared to the first embodiment. The design of the gutter-shaped recess (8) and of the central part (4c) of the bar (4) is different here. At the location of the middle part (8b), recess (8) comprises an indentation (18) and the central part (4c) comprises a protrusion (17) which is accommodable in this indentation (18). The rotation axis (A) extends along the length direction of the middle part (8b) and extends centrally through the middle part (8b). The plane of symmetry of the mudguard (1) is configured to extend upright when the bicycle (2) is in use. As is visible in Fig. 15, the protrusion (17) can come into contact with the edges (9c) of the indentation (18) in the third embodiment. Here, the arms (4b) and legs (4a) will either rotate in an upward direction or will rotate in a downward direction during rotation of the bar (4). This is clearly visible in Fig. 15. Here, these edges (9c) of the indentation (18) then form detaining means (9c) which limit the rotation of the bar (4) through the passage. As is visible in Fig. 16, the indentation (18) comprises tooth-like grooves (9d) in which the protrusion (17) can engage in the fourth embodiment. By choosing in which groove (9d) to arrange the protrusion (17), the position of the bar (4) with respect to the fastening member (6) is determined. These positions are rotated with respect to each other. Here, these grooves (9d) form the detaining means (9d).

With the first three embodiments, the bar (4) is able to execute a limited rotation so that the ends of the legs (4a) which are configured to be fastened to a fixed part (5a, 5b) of the bicycle (2) can be moved upwards or downwards after the bar (4) has been fastened to the mudguard (1) and before the bar (4) is fastened to a fixed part (5a, 5b) of the bicycle (2). In this way, it is possible to choose where the bar (4) will be fastened to the bicycle part (5a, 5b) and to which bicycle part (5a, 5b). This is clearly visible in Figs. 1 and 2, in which the bars (4) are fastened to the frame (5a) at different heights and once even to the wheel shaft (5b).

## Claims

1. Assembly of a mudguard for a bicycle, comprising
- a mudguard (1) that is a single-part mudguard (1), comprising an inner wall surface (3) which is configured to face a bicycle tyre after installation on a bicycle (2);
- a bar (4) which is configured to connect the mudguard (1) to a fixed part (5a, 5b) of the bicycle (2), and
- a fastening member (6) which is fastenable to the mudguard (1) and by means of which the bar (4) is fastenable to the mudguard (1) at the height of the inner wall surface (3),
wherein the fastening member (6) comprises a base part (7) with a gutter-shaped recess (8), and wherein the recess (8) is covered and forms a passage, wherein the bar (4) is configured to extend through this passage and can assume at least two positions in this passage which are rotated with respect to each other and in that the fastening member (6) and/or the mudguard (1) comprises one or several detaining means (9a, 9b, 9c, 9d) which limit the possible positions of the bar in the passage, so that the bar (4) is able to assume two rotated end positions in the passage which extend with respect to each other according to a rotation angle **characterized in that** the base part (7) is configured to extend with one side essentially against the inner wall surface (3), wherein this side comprises the gutter-shaped recess (8), so that this gutter-shaped recess (8) is covered by the inner wall surface (3) and the recess (8) forms the said passage, and **in that** the inner wall surface (3), at least at the location of the recess (8), forms an uninterrupted continuous unit, so that the recess (8) is completely covered by the inner wall surface (3).

2. Assembly according to Claim 1, **characterized in that** the bar (4) is configured to be clamped between the fastening member (6) and the mudguard (1).

3. Assembly according to one of the preceding claims, **characterized in that** the bar (4) is configured to extend rotatably and the one or several detaining means (9a, 9b, 9c, 9d) are configured to limit the rotation of the bar (4) in the passage.

4. Assembly according to one of the preceding claims, **characterized in that** the fastening member (6), in particular the base part (7), comprises the one or several detaining means (9a, 9b, 9c, 9d).

5. Assembly according to Claim 4 **characterized in that** the one or several detaining means (9a, 9b, 9c, 9d) form a boundary of the gutter-shaped recess (8).

6. Assembly according to Claims 5 and 4, **characterized in that** the one or several detaining means (9a, 9b, 9c, 9d) extend at the location of an end portion (8a) of the gutter-shaped recess (8).

7. Assembly according to one of the preceding claims, **characterized in that** the bar (4) extends along a plane and the bar (4) has a neutral position in the gutter-shaped recess (8), wherein the plane in which the bar (4) extends makes an angle of essentially 90° with respect to the contact surface on the mudguard (1), at the location of the gutter-shaped recess (8), wherein the maximum rotation of the bar (4) from the neutral position in the one direction is greater than in the other direction.

8. Assembly according to one of the preceding claims, **characterized in that** the inner wall surface (3) comprises a protrusion (10) which limits a movement of the bar (4) through the passage when the bar (4) is in a fastened position on the mudguard (1).

9. Assembly according to Claim 8, **characterized in that** the inner wall surface (3) comprises two said protrusions (10), wherein these protrusions (10) extend along the length direction of the mudguard (1) and are configured to extend on both sides of the passage.

10. Assembly according to one of the preceding claims, **characterized in that** the fastening member (6) is configured to delimit an end edge of the mudguard (1), viewed along the length direction of the mudguard (1).

11. Assembly according to one of the preceding claims, **characterized in that** the mudguard (1) essentially comprises a plane of symmetry viewed along its length direction, comprises two said protrusions (10) at the location of its inner wall surface (3) which extend along the length direction of the mudguard (1) at a distance apart and along both sides of the plane of symmetry, wherein the base part (7) is configured to extend essentially against the inner wall surface (3) and between both protrusions (10).

12. Bicycle (2) comprising an assembly as illustrated in one or several of the Claims 1 to 11.

13. Bicycle (2) according to Claim 12, **characterized in that** the bar (4) extends along a plane and the bar (4) has a neutral position in the gutter-shaped recess (8), wherein the plane in which the bar (4) extends makes an angle of essentially 90° with respect to the contact surface on the mudguard (1), at the location of the gutter-shaped recess (8), wherein the maximum rotation of the bar (4) from the neutral position in the upward direction is greater than in the downward direction.

## Patentansprüche

1. Anordnung eines Schutzblechs für ein Fahrrad, umfassend
- ein Schutzblech (1), bei dem es sich um ein einteiliges Schutzblech (1) handelt, das eine innere Wandfläche (3) umfasst, die dazu ausgestaltet ist, nach der Installierung an einem Fahrrad (2) einem Fahrradreifen zugewandt zu sein,
- eine Stange (4), die dazu ausgestaltet ist, das Schutzblech (1) mit einem feststehenden Teil (5a, 5b) des Fahrrads (2) zu verbinden, und
- ein Befestigungsglied (6), das an dem Schutzblech (1) befestigt werden kann und mittels dessen die Stange (4) auf der Höhe der inneren Wandfläche (3) an dem Schutzblech (1) befestigt werden kann,
wobei das Befestigungsglied (6) einen Basisteil (7) mit einer rinnenförmigen Aussparung (8) umfasst und wobei die Aussparung (8) abgedeckt ist und einen Durchgang bildet, wobei die Stange (4) dazu ausgestaltet ist, sich durch diesen Durchgang zu erstrecken, und mindestens zwei Positionen in diesem Durchgang einnehmen kann, die bezüglich einander gedreht sind, und dass das Befestigungsglied (6) und/oder das Schutzblech (1) ein oder mehrere Haltemittel (9a, 9b, 9c, 9d) umfasst, die die möglichen Positionen der Stange in dem Durchgang begrenzen, so dass die Stange (4) zwei gedrehte Endpositionen in dem Durchgang einnehmen kann, die sich bezüglich einander gemäß einem Rotationswinkel erstrecken, **dadurch gekennzeichnet, dass** der Basisteil (7) dazu ausgestaltet ist, sich mit einer Seite im Wesentlichen gegen die innere Wandfläche (3) zu erstrecken, wobei diese Seite die rinnenförmige Aussparung (8) umfasst, so dass diese rinnenförmige Aussparung (8) von der inneren Wandfläche (3) abgedeckt ist und die Aussparung (8) den Durchgang bildet, und dass die innere Wandfläche (3) mindestens an der Stelle der Aussparung (8) eine ununterbrochene, durchgehende Einheit bildet, so dass die Aussparung (8) vollständig von der inneren Wandfläche (3) abgedeckt ist.

2. Anordnung nach Anspruch 1, **dadurch gekennzeichnet, dass** die Stange (4) zum Klemmen zwischen dem Befestigungsglied (6) und dem Schutzblech (1) ausgestaltet ist.

3. Anordnung nach einem der vorhergehenden Ansprüche, **dadurch gekennzeichnet, dass** die Stange (4) dazu ausgestaltet ist, sich drehbar zu erstrecken, und das eine oder die mehreren Haltemittel (9a, 9b, 9c) dazu ausgestaltet sind, die Drehung der Stange (4) in dem Durchgang zu begrenzen.

4. Anordnung nach einem der vorhergehenden Ansprüche, **dadurch gekennzeichnet, dass** das Befestigungsglied (6), insbesondere der Basisteil (7), das eine oder die mehreren Haltemittel (9a, 9b, 9c, 9d) umfasst.

5. Anordnung nach Anspruch 4, **dadurch gekennzeichnet, dass** das eine oder die mehreren Haltemittel (9a, 9b, 9c, 9d) eine Grenze der rinnenförmigen Aussparung (8) bilden.

6. Anordnung nach Ansprüchen 5 und 4, **dadurch gekennzeichnet, dass** sich das eine oder die mehreren Haltemittel (9a, 9b, 9c, 9d) an dem Ort eines Endabschnitts (8a) der rinnenförmigen Aussparung (8) erstrecken.

7. Anordnung nach einem der vorhergehenden Ansprüche, **dadurch gekennzeichnet, dass** sich die Stange (4) entlang einer Ebene erstreckt und die Stange (4) eine neutrale Position in der rinnenförmigen Aussparung (8) hat, wobei die Ebene, in der sich die Stange (4) erstreckt, an dem Ort der rinnenförmigen Aussparung (8) einen Winkel von im Wesentlichen 90° mit der Kontaktfläche an dem Schutzblech (1) einschließt, wobei die maximale Drehung der Stange (4) aus der neutralen Position in die eine Richtung größer als in die andere Richtung ist.

8. Anordnung nach einem der vorhergehenden Ansprüche, **dadurch gekennzeichnet, dass** die innere Wandfläche (3) einen Vorsprung (10) umfasst, der eine Bewegung der Stange (4) durch den Durchgang begrenzt, wenn die Stange (4) in einer befestigten Position an dem Schutzblech (1) ist.

9. Anordnung nach Anspruch 8, **dadurch gekennzeichnet, dass** die innere Wandfläche (3) zwei Vorsprünge (10) umfasst, wobei sich diese Vorsprünge (10) entlang der Längenrichtung des Schutzblechs (1) erstrecken und dazu ausgestaltet sind, sich an beiden Seiten des Durchgangs zu erstrecken.

10. Anordnung nach einem der vorhergehenden Ansprüche, **dadurch gekennzeichnet, dass** das Befestigungsglied (6) dazu ausgestaltet ist, entlang der Längenrichtung des Schutzblechs (1) gesehen, einen Endrand des Schutzblechs (1) zu begrenzen.

11. Anordnung nach einem der vorhergehenden Ansprüche, **dadurch gekennzeichnet, dass** das Schutzblech (1), entlang seiner Längenrichtung gesehen, im Wesentlichen eine Symmetrieebene umfasst, zwei Vorsprünge (10) an dem Ort seiner inneren Wandfläche (3), die sich entlang der Längenrichtung des Schutzblechs (1) beabstandet und entlang beider Seiten der Symmetrieebene erstrecken, wobei der Basisteil (7) dazu ausgestaltet ist, sich im Wesentlichen gegen die innere Wandfläche (3) und zwischen beiden Vorsprüngen (10) zu erstrecken.

12. Fahrrad (2), umfassend eine Anordnung nach einem oder mehreren der Ansprüche 1 bis 11.

13. Fahrrad (2) nach Anspruch 12, **dadurch gekennzeichnet, dass** sich die Stange (4) entlang einer Ebene erstreckt und die Stange (4) eine neutrale Position in der rinnenförmigen Aussparung (8) hat, wobei die Ebene, in der sich die Stange (4) erstreckt, an dem Ort der rinnenförmigen Aussparung (8) einen Winkel von im Wesentlichen 90° mit der Kontaktfläche an dem Schutzblech (1) einschließt, wobei die maximale Drehung der Stange (4) aus der neutralen Position in die nach oben gehende Richtung größer als in die nach unten gehende Richtung ist.

## Revendications

1. Ensemble de garde-boue pour bicyclette, comprenant
un garde-boue (1) qui est un garde-boue en une seule pièce (1), comprenant une surface de paroi intérieure (3) qui est conçue pour faire face à un pneu de bicyclette après installation sur une bicyclette (2) ;
une barre (4) qui est conçue pour relier le garde-boue (1) à une partie fixe (5a, 5b) de la bicyclette (2), et
un élément de fixation (6) qui peut être fixé au garde-boue (1) et au moyen duquel la barre (4) peut être fixée au garde-boue (1) à la hauteur de la surface de paroi intérieure (3),
l'élément de fixation (6) comprenant une partie de base (7) avec un évidement en forme de gouttière (8), et l'évidement (8) étant couvert et formant un passage, la barre (4) étant conçue pour s'étendre à travers ce passage et pouvant prendre au moins deux positions dans ce passage qui sont tournées l'une par rapport à l'autre et en ce que l'élément de fixation (6) et/ou le garde-boue (1) comprennent un ou plusieurs moyens de retenue (9a, 9b, 9c, 9d) qui limitent les positions possibles de la barre dans le passage, de sorte que la barre (4) puisse prendre deux positions d'extrémité tournées dans le passage qui s'étendent l'une par rapport à l'autre selon un angle de rotation, **caractérisé en ce que** la partie de base (7) est conçue pour s'étendre avec un côté essentiellement contre la surface de paroi intérieure (3), ce côté comprenant l'évidement en forme de gouttière (8), de sorte que cet évidement en forme de gouttière (8) soit couvert par la surface de paroi intérieure (3) et l'évidement (8) forme ledit passage, et **en ce que** la surface de paroi intérieure (3), au moins à l'emplacement de l'évidement (8), forme une unité continue ininterrompue, de sorte que l'évidement (8) soit complètement couvert par la surface de paroi intérieure (3) .

2. Ensemble selon la revendication 1, **caractérisé en ce que** la barre (4) est conçue pour être serrée entre l'élément de fixation (6) et le garde-boue (1).

3. Ensemble selon l'une des revendications précédentes, **caractérisé en ce que** la barre (4) est conçue pour s'étendre en rotation et le ou les moyens de retenue (9a, 9b, 9c, 9d) sont conçus pour limiter la rotation de la barre (4) dans le passage.

4. Ensemble selon l'une des revendications précédentes, **caractérisé en ce que** l'élément de fixation (6), notamment la partie de base (7), comprend le ou les moyens de retenue (9a, 9b, 9c, 9d).

5. Ensemble selon la revendication 4, **caractérisé en ce que** le ou les moyens de retenue (9a, 9b, 9c, 9d) forment une limite de l'évidement en forme de gouttière (8) .

6. Ensemble selon les revendications 5 et 4, **caractérisé en ce que** le ou les moyens de retenue (9a, 9b, 9c, 9d) s'étendent à l'emplacement d'une partie d'extrémité (8a) de l'évidement en forme de gouttière (8).

7. Ensemble selon l'une des revendications précédentes, **caractérisé en ce que** la barre (4) s'étend le long d'un plan et la barre (4) a une position neutre dans l'évidement en forme de gouttière (8), le plan dans lequel la barre (4) s'étend faisant un angle d'essentiellement 90° par rapport à la surface de contact sur le garde-boue (1), à l'emplacement de l'évidement en forme de gouttière (8), la rotation maximale de la barre (4) à partir de la position neutre dans une direction étant plus grande que dans l'autre direction.

8. Ensemble selon l'une des revendications précédentes, **caractérisé en ce que** la surface de paroi intérieure (3) comprend une saillie (10) qui limite un mouvement de la barre (4) à travers le passage lorsque la barre (4) est dans une position fixée sur le garde-boue (1).

9. Ensemble selon la revendication 8, **caractérisé en ce que** la surface de paroi intérieure (3) comprend deux desdites saillies (10), ces saillies (10) s'étendant dans la direction de la longueur du garde-boue (1) et étant conçues pour s'étendre des deux côtés du passage.

10. Ensemble selon l'une des revendications précédentes, **caractérisé en ce que** l'élément de fixation (6) est conçu pour délimiter un bord d'extrémité du garde-boue (1), vu dans le sens de la longueur du garde-boue (1).

11. Ensemble selon l'une des revendications précédentes, **caractérisé en ce que** le garde-boue (1) comprend essentiellement un plan de symétrie vu dans le sens de sa longueur, comprend deux desdites saillies (10) à l'emplacement de sa surface de paroi intérieure (3) qui s'étendent dans le sens de la longueur du garde-boue (1) à une certaine distance l'une de l'autre et le long des deux côtés du plan de symétrie, la partie de base (7) étant conçue pour s'étendre essentiellement contre la surface de paroi intérieure (3) et entre les deux saillies (10).

12. Bicyclette (2) comprenant un ensemble selon une ou plusieurs des revendications 1 à 11.

13. Bicyclette (2) selon la revendication 12, **caractérisée en ce que** la barre (4) s'étend le long d'un plan et la barre (4) a une position neutre dans l'évidement en forme de gouttière (8), le plan dans lequel la barre (4) s'étend faisant un angle d'essentiellement 90° par rapport à la surface de contact sur le garde-boue (1), à l'emplacement de l'évidement en forme de gouttière (8), la rotation maximale de la barre (4) à partir de la position neutre dans la direction vers le haut étant plus grande que dans la direction vers le bas.
